# EUROPÄISCHE PATENTSCHRIFT

(11) **EP 2 690 052 B1**
(45) Veröffentlichungstag und Bekanntmachung des Hinweises auf die Patenterteilung: **07.01.2015**
(21) Anmeldenummer: 13175596.9
(22) Anmeldetag: 08.07.2013
(51) Int. Cl.: B66C 1/12, F16G 15/00

(54) **Containeraufhängevorrichtung**
Container suspension device
Dispositif de suspension de conteneur

(30) Priorität: 27.07.2012 DE 102012106857
(43) Veröffentlichungstag der Anmeldung: 29.01.2014
(73) Patentinhaber: Thiele GmbH & Co. KG, 58640 Iserlohn (DE)
(72) Erfinder: Norpoth, Bernhard, 45309 Essen (DE)
(74) Vertreter: Griepenstroh, Jörg

(56) Entgegenhaltungen:
- DE-A1- 2 819 987
- DE-A1- 3 903 138
- DE-U1- 9 216 852
- GB-A- 119 137
- NL-A- 7 101 538
- US-A- 3 486 783

## Beschreibung

Die vorliegende Erfindung betrifft eine Containeraufhängevorrichtung zum Koppeln eines Containers mit einem Absetzarm eines Containertransporters gemäß den Merkmalen im Oberbegriff von Patentanspruch 1.

Aus dem Stand der Technik sind Containertransporter bekannt, die in Form eines Lastkraftwagens ausgebildet sind und einen Absetzarm aufweisen. Dieser Absetzarm wird um eine Schwenkachse bewegt, so dass ein hinter dem Containertransporter befindlicher Container von einem Untergrund durch die Schwenkbewegung des Absetzarmes angehoben werden kann und auf eine Ladefläche des Containertransporters befördert wird.

Um eine Koppelung von Absetzarm mit dem Container herzustellen wird eine Kettenverbindung zwischen einem oberen bzw. äußeren Ende des Absetzarmes sowie dem Container insbesondere eine Aufhängung an dem Container hergestellt. Damit verschiedene Containergrößen oder aber auch die Container aus verschiedenen Lagen angehoben werden können, sind die Ketten bevorzugt derart mit dem Absetzarm koppelbar, dass sie in ihrer Länge eines jeden Kettenstranges einstellbar sind. Hierzu ist an dem Ende des Absetzarmes ein Kettenverkürzungselement vorgesehen, wobei maßgeblich eine Kette an dem Kettenverkürzungselement gelagert ist, die dann in der täglichen Nutzung durch das Kettenverkürzungselement auf die gewünschte Länge eingestellt wird und ein Absetzen bzw. Aufnehmen der Container hierdurch realisiert wird. Beispielsweise ist eine solche Absetz- und Aufnahmevorrichtung für einen Container aus der DE 14 55 635 A1 bekannt. Ebenfalls aus der DE 10 2008 020 777 A1 ist ein entsprechendes Containerfahrzeug bekannt.

Eine Aufhängevorrichtung ist beispielsweise aus der US 3,486,783 A bekannt, bei der ein einteilig ausgebildetes Kettenverkürzungselement zwei Kettenstränge aufnimmt, die in einem Winkel zueinander angeordnet sind.

Ferner ist aus der DE 28 19 987 A1 eine Containeraufhängevorrichtung bekannt, bei der ein Anschlaggeschirr für einen Absetzkipper offenbart wird.

Aufgabe der vorliegenden Erfindung ist es daher, ausgehend vom Stand der Technik eine Containeraufhängevorrichtung bereitzustellen, mit Hilfe derer ein universelles An- und Abkoppeln von verschiedenen Containergrößen möglich ist, wobei ein Kettenverkürzungselement hierzu universell handhabbar ist, einen gegenüber aus dem Stand der Technik bekannten Kettenverkürzungselementen einfacheren und zugleich leichteren sowie robusteren Aufbau aufweist.

Die Aufgabe wird erfindungsgemäß mit einer Containeraufhängevorrichtung gemäß den Merkmalen im Patentanspruch 1 gelöst.

Vorteilhafte Ausführungsvarianten der vorliegenden Erfindung sind Bestandteil der abhängigen Patentansprüche.

Die erfindungsgemäße Containeraufhängevorrichtung zum Koppeln eines Containers mit einem Absetzarm eines Containertransporters bzw. eines Absetzkippers weist ein Kettenverkürzungselement auf, von dem aus zwei Kettenstränge in einem Winkel zueinander verlaufen, wobei die Enden der Kettenstränge mit einer Aufhängung des Containers koppelbar sind und jeweils ein Kettenglied eines Kettenstranges in einer Aufnahme des Kettenverkürzungselements lagefixierbar ist. Die Containeraufhängevorrichtung zeichnet sich erfindungsgemäß dadurch aus, dass das Kettenverkürzungselement einteilig ausgebildet ist, wobei das Kettenverkürzungselement einen Basiskörper aufweist und an einem oberen Ende des Basiskörpers eine Anbindung für den Absetzarm ausgebildet ist und für jeden der beiden Kettenstränge eine Aufnahmebuchse zur lagefixierten Koppelung mit jeweils mindestens einem Kettenglied vorgesehen ist, wobei ein nicht benötigter Längenabschnitt eines jeden Kettengliedes durch eine unterseitige Öffnung des Kettenverkürzungselementes herunterhängt. Der Basisträger weist einen zentralen Hohlraum auf, durch den die zu verkürzenden Teile der Ketten geführt werden und dann durch die unterseitige Öffnung nach unten ragend zeigen.

Das erfindungsgemäße Kettenverkürzungselement wird bevorzugt über die Anbindung an den Absetzarm schwenkbar gekoppelt. Durch die Schwenkbewegung des Absetzarmes erfolgt somit auch eine Schwenkbewegung des Kettenverkürzungselementes, so dass der Container mit seiner Unterseite während des Absetz- oder Aufnahmevorgangs grundsätzlich zu einem Boden hin orientiert ist. Ferner ist die Anbindung derart ausgebildet, dass auch eine Schwenkbewegung des Kettenverkürzungselementes in Querrichtung, mithin in Querrichtung des Containertransporters möglich ist, um verschiedene Breiten von Containern aufnehmen zu können.

Erfindungsgemäß sind an der Aufhängevorrichtung auf jeder Fahrzeugseite, mithin links und rechtsseitig jeweils ein Kettenverkürzungselement angeordnet. Von jedem Kettenverkürzungselement aus sind zwei Kettenstränge in Fahrzeuglängsrichtung orientiert abstehend ausgebildet, die dann wiederum an einer Aufhängung des Containers gekoppelt werden. Um verschiedene Containertypen oder aber auch Containergrößen mit voneinander verschieden beabstandet positionierten Aufhängungen aufnehmen zu können, ist zum einen die Länge eines jeden Kettenstranges einstellbar, zum anderen der Winkel in dem der Kettenstrang von dem Kettenverkürzungselement aus zu der Aufhängung des Containers verläuft.

Das erfindungsgemäße Kettenverkürzungselement zeichnet sich somit insbesondere dadurch aus, dass es zum einen einteilig ausgebildet ist. Dies kann durch ein einteilig ausgebildetes Schweissbauteil erfolgen, oder aber durch ein einstückiges und werkstoffeinheitliches Gussbauteil. Die einzelnen Komponenten oder aber alle Komponenten können zusätzlich schmiedetechnisch bearbeitet sein. Hierdurch ist es möglich ein Kettenverkürzungselement bereitzustellen, dass aufgrund der Möglichkeit der Längen und Winkeleinstellung der von dem Kettenverkürzungselement sich zu der Aufnahme des Containers erstreckenden Kettenstränge universell einstellbar ist, wobei aufgrund der Möglichkeit, dass ein nicht benötigter Längenabschnitt eines jeweiligen Kettenstranges durch eine unterseitige Öffnung des Kettenverkürzungselementes herunterhängt eine einfache Handhabung gegeben ist. Somit wird ein Kettenverkürzungselement bereitgestellt, dass aufgrund seiner Einteiligkeit ein geringes Eigengewicht bei gleichzeitig hoher Robustheit aufweist und aufgrund der Einstellungsmöglichkeiten bezüglich der Verschwenkung und/oder Verkürzung der einzelnen Kettenstränge universell einsetzbar ist.

Hierzu ist es insbesondere möglich, dass die zwei sich von dem Kettenverkürzungselement erstreckenden Kettenstränge in einem Winkelbereich zueinander zwischen 25 und 140°, insbesondere zwischen 30 und 120° orientiert verlaufend sein können und/oder das ein jeweiliger Kettenstrang bei einem aufgenommenen Container in einem Winkel zwischen 10 und 70°, insbesondere in einem Winkel zwischen 15 und 60° zu einer Vertikalen verläuft. Die Vertikale ist dabei insbesondere durch die Mitte des Kettenverkürzungselements verlaufend ausgebildet. Dadurch, dass es möglich ist mit den zwei Kettensträngen in einem Winkel zwischen 25 und 140° insbesondere zwischen 30 und 120° zu operieren, wird mit nur einem Kettenverkürzungselement die Möglichkeit gegeben bei einem Containertransporter alle erdenklichen handelsüblichen Container über den Absetzarm aufzunehmen bzw. abzusetzen, ohne dass das dafür benötigte Hebezeug gewechselt werden muss. Einzig die Länge des jeweiligen Kettenstranges muss auf den jeweiligen Container abgestimmt werden, wobei sich durch die erfindungsgemäße Aufnahmebuchse an dem Kettenverkürzungselement dann der Winkelbereich eines jeden Kettenstranges zu einer Vertikalen bzw. der beiden Kettenstränge zueinander beim Anheben oder aber Absetzen, mithin beim Beaufschlagen des Absetzarmes mit einer Last entsprechend variabel einstellt.

Hierzu ist insbesondere das Kettenverkürzungselement spiegelsymmetrisch um eine Vertikalachse aufgebaut, wobei auf jeder Seite ein Kettenaufnahmebereich angeordnet ist und jeder Kettenaufnahmebereich eine Durchführöffnung zur Durchführung eines Kettenstranges aufweist. Hierdurch wird es ermöglicht, Container die auf jeder Seite zwei nahezu in einem parallel Abstand zum Containerschwerpunkt angeordnete Aufhängungen besitzen mit zwei gleich langen von dem Kettenverkürzungselement sich erstreckenden Kettensträngen zu koppeln und anschließend den Container anzuheben.

Im Rahmen der Erfindung ist es jedoch auch möglich, bei an jeder Seite des Containers asymmetrisch angeordneten Aufhängungen voneinander verschieden lange Kettenstränge an einem Kettenverkürzungselement anzuordnen, wobei sich der Container im angehobenen Zustand durch seinen Schwerpunkt derart einpendelt, dass sein Boden maßgeblich während des Absetz- oder aber Aufnahmevorganges parallel zu einem Untergrund orientiert gehalten ist. Die verschiedenen Längen eines jeden Kettenstranges sind einfach und schnell aufgrund einer Variation der Länge des Kettenstranges mit dem Kettenverkürzungselement einstellbar, so dass die Kette in einer jeweiligen Aufnahmebuchse lagefixiert gekoppelt wird. Ein jeweiliger Winkel eines jeden Kettenstranges stellt sich dann durch eine Relativverdrehung der Kettenglieder zueinander, aufgrund der in der Aufnahmebuchse gekoppelten Kettenglieder, ein.

Hierzu ist in einem unteren Bereich der Durchführöffnung zur Durchführung eines jeden Kettenstranges ein vertikal orientierter Längsschlitz zur Aufnahme eines stehenden Kettengliedes ausgebildet. Maßgeblich ist das stehende Kettenglied derart in dem Längsschlitz orientiert gelagert, dass ein Steg auf einem Boden des Längsschlitzes aufliegt und die jeweiligen Kettenbögen des Kettengliedes bezogen auf eine Fahrzeugrichtung nach vorn und hinten orientiert gelagert sind bzw. bezogen auf eine Horizontalrichtung im Wesentlichen der Steg horizontal verläuft. Besonders vorteilig ist es dabei, wenn der Steg nicht vollständig parallel zu einer Horizontalen verläuft, sondern jeweils zu einem Innenraum hin des Kettenverkürzungselementes orientiert in einem leicht abschüssigen Winkel verlaufend angeordnet ist. Bei Beaufschlagung des jeweiligen Kettenstranges mit einer Last zum Anheben des Containers wird hierdurch eine Widerlagerfunktion des jeweils stehenden Kettengliedes erreicht, weshalb das stehende Kettenglied und auch der durch die unterseitige Öffnung herunterhängende Teil der Kette sich nicht aus der Aufnahmebuchse löst und in Richtung zu der Containeraufhängung abgleitet.

Ferner ist zur weiteren Sicherung im Bereich des Längsschlitzes ein Sicherungsmittel zur zusätzlichen Lagefixierung des liegenden Kettengliedes angeordnet. Das Sicherungsmittel ist dabei in einer bevorzugten Ausführungsform derart ausgebildet, dass ein Bolzen, insbesondere ein Kugelbolzen in den Bereich des Längsschlitzes hineinragt, wobei der Kugelbolzen federnd gelagert ist und bei Einlegen des stehenden Kettengliedes in den Längsschlitz und Passieren eines Schenkels zurückgedrückt wird, wobei nach Passieren des Steges des stehenden Kettengliedes das Sicherungsmittel in seine Sicherungsposition zurückkehrt. Im Rahmen der Erfindung ist es jedoch auch möglich das Sicherungsmittel als verlagerbaren Stift auszubilden, der bei Einlegen des stehenden Kettengliedes in den Längsschlitz durch einen anwendenden Monteur zurückgeschoben wird und nach Einlegen in den Längsschlitz in seine Sicherungsposition zurückfährt.

Zur Realisierung der Schwenkbewegung der Kettenstränge zueinander ist ferner vorgesehen, dass jeweils außenseitig das auf das stehende Kettenglied folgende liegende Kettenglied, mithin das in Zugrichtung des Kettenstranges auf das stehende Kettenglied folgende liegende Kettenglied, in einem Kettenbett gelagert wird. Die Hauptkrafteinleitung erfolgt dabei erfindungsgemäß in das in dem Kettenbett liegende Kettenglied. Das liegende Kettenglied wird dabei insbesondere derart in dem Kettenbett bzw. einer Kettentasche gelagert, dass es zu einer Vertikalen in einem Winkel zwischen 50 und 70°, insbesondere 60° liegt. Das auf das in dem Kettenbett liegende Kettenglied wiederum in Zugrichtung folgende stehende Kettenglied stellt somit zwischen dem Bogen des liegenden Kettenglieds und dem Bogen des stehenden Kettengliedes den Winkelbereich der Kettenstränge ein bzw. ist in diesem Winkelbereich vorzugsweise zwischen 30 und 120° beider Kettenstränge zueinander verstellbar, ohne dass das stehende Kettenglied aus dem Längsschlitz bzw. das liegende Kettenglied aus dem Kettenbett gehoben wird.

Zur weiteren Ausbildung eines Widerlagers zum Halten eines jeden Kettenstranges in dem Kettenverkürzungselement ist das Kettenverkürzungselement in einem Innenbereich des Basiskörpers hohl ausgebildet, wobei in dem Innenbereich auf das jeweils in dem Längsschlitz stehende Kettenglied ein liegendes Kettenglied in einem Innenkettenbett gelagert ist, wobei insbesondere über das Innenkettenbett ein Widerlager für die über den Kettenstrang übertragene Zugkraft zum Anheben des Containers gegeben ist.

Besonders vorteilig ist hierzu ferner an dem innenliegenden Kettenbett in Richtung zu dem in dem Längsschlitz stehenden Kettenglied eine Hinterschneidung ausgebildet, wobei der Bogen des in dem innenliegenden Innenkettenbett liegenden Kettengliedes durch die Hinterschneidung zumindest abschnittsweise formschlüssig umgriffen ist und so ein Widerlager in Zugrichtung gegeben ist.

Die zuvor genannten Merkmale sind im Rahmen der Erfindung beliebig untereinander kombinierbar mit den jeweils damit einhergehenden Vorteilen.

Weitere Vorteile, Merkmale, Eigenschaften und Aspekte der vorliegenden Erfindung sind Bestandteil der folgenden Beschreibung. Bevorzugte Ausführungsvarianten werden in den schematischen Figuren dargestellt, diese dienen dem einfachen Verständnis der Erfindung. Es zeigen:
- Figur 1: ein erfindungsgemäßes Kettenverkürzungselement in einer Querschnittsansicht mit zwei Kettensträngen,
- Figur 2: ein erfindungsgemäßes Kettenverkürzungselement in einer Querschnittsansicht als einteiliges Gussbauteil,
- Figur 3a und b: ein erfindungsgemäßes Kettenverkürzungselement als mehrteilige Schweisskonstruktion,
- Figur 4: eine Schnittansicht entlang der Schnittlinie II-II aus Figur 2,
- Figur 5: eine Seitenansicht auf das Kettenverkürzungselement,
- Figur 6: eine perspektivische Ansicht eines Teilabschnitts des erfindungsgemäßen Kettenverkürzungselementes im Bereich der Durchgangsöffnung,
- Figur 7a und: b einen erfindungsgemäßen Sicherungsbolzen in einer Seitenansicht und einer Querschnittsansicht,
- Figur 8a und b: ein erfindungsgemäßes Kettenverkürzungselement mit Kugeldruckstiften in Querschnittsansicht und Seitenansicht,
- Figur 9a bis d: ein erfindungsgemäßes Kettenverkürzungselement in einer Querschnittansicht und einer Seitenansicht mit einem Sperrhebel,
- Figur 10a bis e: einen erfindungsgemäßen Sperrhebel in verschiedenen Ansichten in Sperrstellung und
- Figur 11a bis e: den Sperrhebel in Offenstellung.

In den Figuren werden für gleiche oder ähnliche Bauteile dieselben Bezugszeichen verwendet, auch wenn eine wiederholte Beschreibung aus Vereinfachungsgründen entfällt.

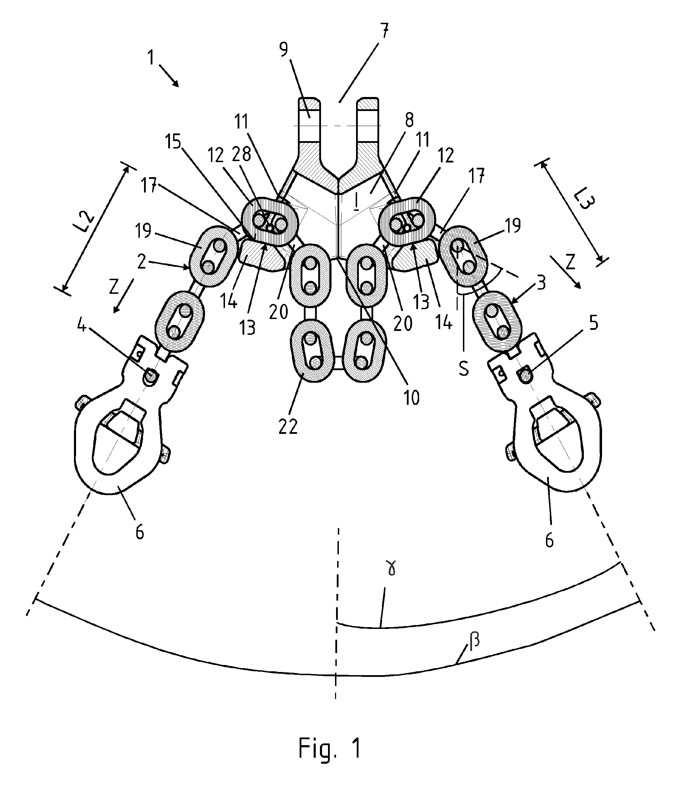

Figur 1 zeigt eine Schnittansicht durch ein erfindungsgemäßes Kettenverkürzungselement 1, wobei an dem Kettenverkürzungselement 1 eine Kette mit einem auf der linken Bildebene dargestellten ersten Kettenstrang 2 und auf der rechten Bildebene zweiten Kettenstrang 3 angeordnet ist. An den Enden 4, 5 des jeweiligen Kettenstranges 2, 3 ist ein Montagehaken 6 angeordnet, der mit einer nicht näher dargestellten Aufhängung eines Containers zum Anheben des Containers gekoppelt wird.

Der jeweilige Kettenstrang 2, 3 ist in seiner Länge L2, L3 individuell einstellbar, was mit dem erfindungsgemäßen Kettenverkürzungselement 1 realisiert wird. Hierzu ist das Kettenverkürzungselement 1 bezogen auf eine Vertikale 7 spiegelsymmetrisch aufgebaut. Das Kettenverkürzungselement 1 weist dazu einen mittig liegenden Basiskörper 8 auf, wobei der Basiskörper 8 an seinem oberen Ende eine Anbindung 9 mit einem nicht näher dargestellten Absetzarm eines Containertransporters aufweist. Der Basiskörper 8 ist in einem Innenraum I hohl ausgebildet, so dass die nicht benötigten Kettenglieder eines jeden Kettenstranges 2, 3 durch eine unterseitige Öffnung 10 des Basiskörpers 8 herunterhängen.

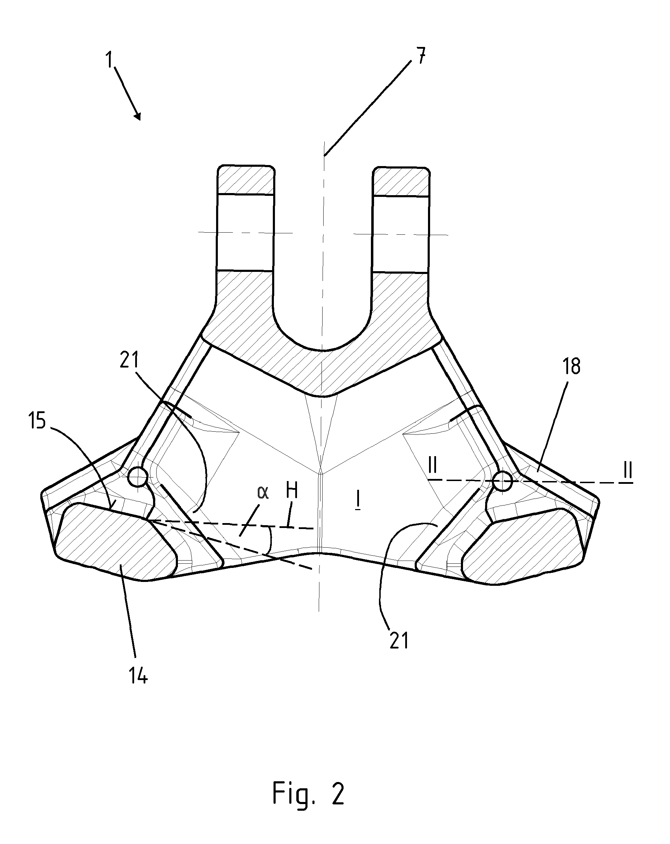

Die beiden Kettenstränge 2, 3 sind jeweils durch eine Durchgangsöffnung 11 aus dem Innenraum I des Basiskörpers 8 herausgeführt, wobei im Bereich der jeweiligen Durchgangsöffnung 11 erfindungsgemäß mindestens ein jeweils stehendes Kettenglied 12 mit seinem unteren Steg 13 auf einem Abstützjoch 14 aufliegt. Das Abstützjoch 14 weist dazu jeweils eine Abstützfläche 15 auf, die in Figur 2 näher dargestellt in einem Winkel α zu einer Horizontalen H derart verläuft, dass das stehende Kettenglied 12 zu dem Innenraum I des Basiskörpers 8 hin geneigt angeordnet ist.

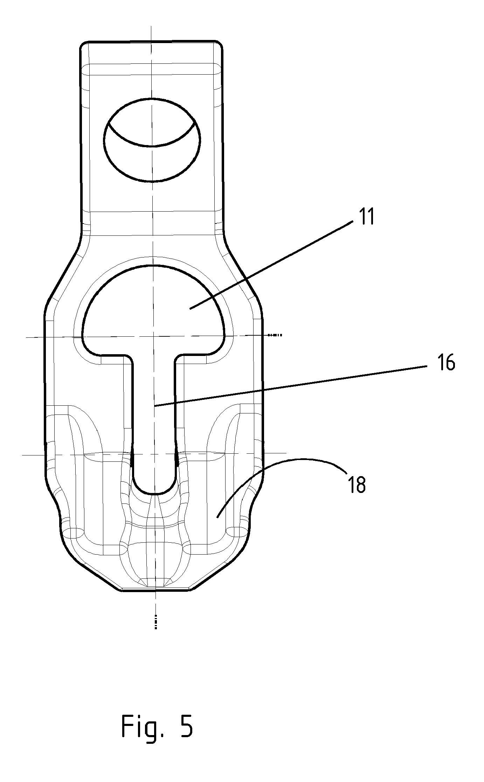

Damit das stehende Kettenglied 12 in seiner Position verbleibt, ist innerhalb der Durchgangsöffnung 11 gemäß Figur 5 dargestellt, ein vertikaler Längsschlitz 16 ausgebildet, der das stehende Kettenglied 12 aufnimmt. In außenseitiger Richtung folgt auf das stehende Kettenglied 12 ein liegendes Kettenglied, dass in einem gemäß Figur 2 und 5 dargestellten Kettenbett 18 liegend formschlüssig lagefixiert angeordnet wird.

Auf das äußere liegende Kettenglied 17 folgt wiederum ein jeweiliges stehendes Kettenglied 19, wobei zwischen den Bögen des liegenden Kettengliedes 17 und des stehenden Kettengliedes 19 ein Schwenkbereich S ausgebildet wird, so dass das jeweils außenliegende stehende Kettenglied 19 um den Bogen des außenliegenden Kettengliedes 17 schwenkbar ist. Dabei ist zwischen dem ersten Kettenstrang 2 und dem zweiten Kettenstrang 3 ein Relativschwenkwinkel β zwischen 30 und 120° einstellbar oder aber zwischen der Vertikalen 7 und einem jeweiligen Kettenstrang 2, 3, hier nur dargestellt für den zweiten Kettenstrang 3 ein Absolutschwenkwinkel γ zwischen 15 und 60° realisierbar. Der Schwenkbereich S wird jedoch ausschließlich durch ein Verschwenken des jeweils außenstehenden äußeren stehenden Kettengliedes 19 sowie darauf in Zugrichtung Z folgenden Kettenstranges 2, 3 ermöglicht.

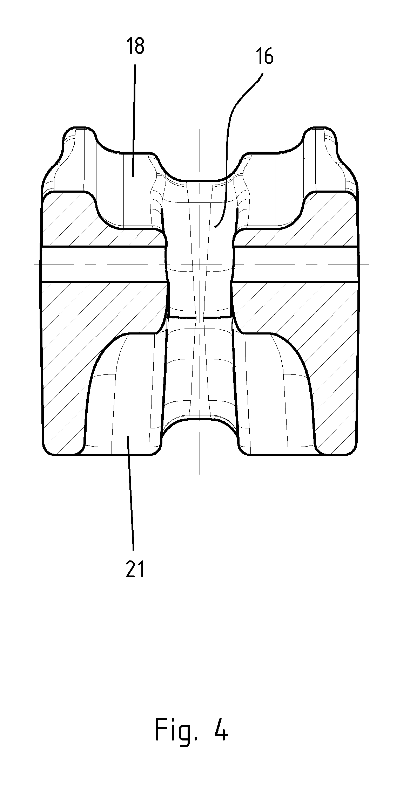

Im Innenbereich folgt auf das im dem Längsschlitz stehende Kettenglied 12 ein jeweils innen liegendes Kettenglied 20 in einem Innenkettenbett 21. Das Innenkettenbett 21 ist dabei gut dargestellt in der Figur 2 sowie in der Figur 4. Auf das innere liegende Kettenglied 20 folgt dann der durch die unterseitige Öffnung 10 herunterhängende nicht benötigte Längenabschnitt 22 des jeweiligen Kettenstranges 2, 3.

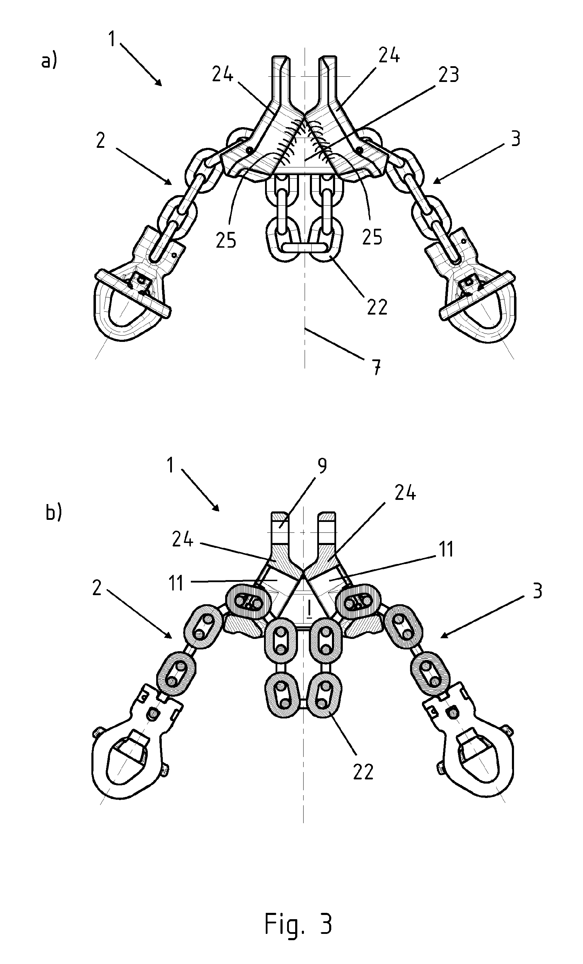

Ferner dargestellt sind in Figur 3a und b ein erfindungsgemäßes Kettenverkürzungselement 1 mit einem jeweiligen ersten und zweiten Kettenstrang 2, 3 in Figur 3a in einer Seitenansicht und in Figur 3b in einer Schnittansicht. Das Kettenverkürzungselement 1 gemäß Figur 3a und b ist als mehrteiliges Schweissbauteil ausgebildet, wobei ein Mittelblech 23 angeordnet ist, dass den Innenraum I des Basiskörpers ausbildet und seitlich zwei Bauteile 24 ausgebildet sind, die einen jeweils spiegelsymmetrischen Aufbau besitzen, wobei in den Bauteilen 24 bzw. durch die Bauteile 24 entsprechend die Anbindung 9 an die nicht näher dargestellte Containeraufnahme sowie die Durchgangsöffnungen 11 zum Hindurchführen von erstem und zweiten Kettenstrang 2, 3 sowie wiederum die Aufnahmen der Kettenglieder ausgebildet sind. Die zwei Bauteile 24 sowie die Mittelbleche 23 sind dann insbesondere über eine Fügenaht 25, die in Figur 3a angedeutet ist, miteinander thermisch gefügt. Die einzelnen Bauteile 24 oder aber auch das Mittelblech 23 können zusätzlich vergütet oder aber schmiedetechnisch bearbeitet sein.

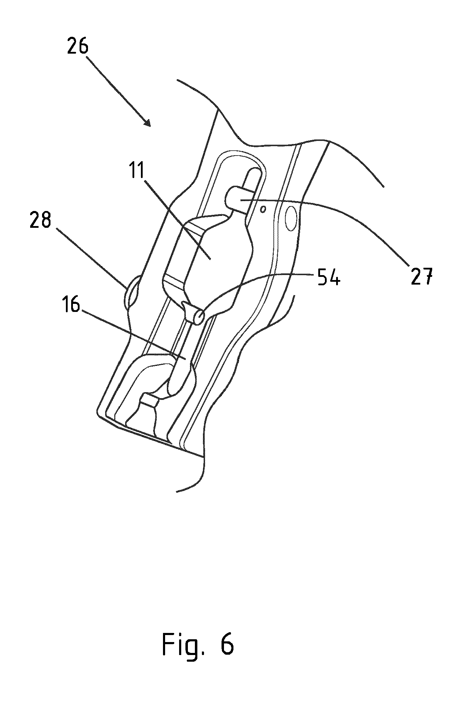

Ferner ist in Figur 6 ein Teilabschnitt 26 des Kettenverkürzungselements 1 perspektivisch in einem Bereich der Durchgangsöffnung dargestellt. Durch die Verwendung eines Verbindungsbolzens wird es möglich, den zu verkürzenden Teil der Kette mit dem Verbindungsbolzen 27 an das Kettenverkürzungselement 1 zu koppeln, mit einem weiteren Verbindungsbolzen 27 ein Aufhängeglied aufzunehmen oder die Verbindung zu einer Anschlagkette herzustellen. Ferner ist in Figur 6 ein Sicherungsbolzen 28 dargestellt, der zumindest bereichsweise in dem Bereich des Längsschlitzes 16 hineinragend ausgebildet ist. Der Sicherungsbolzen kann unterhalb der Durchgangsöffnung 11, aber auch oberhalb der Durchgangsöffnung 11 angeordnet sein.

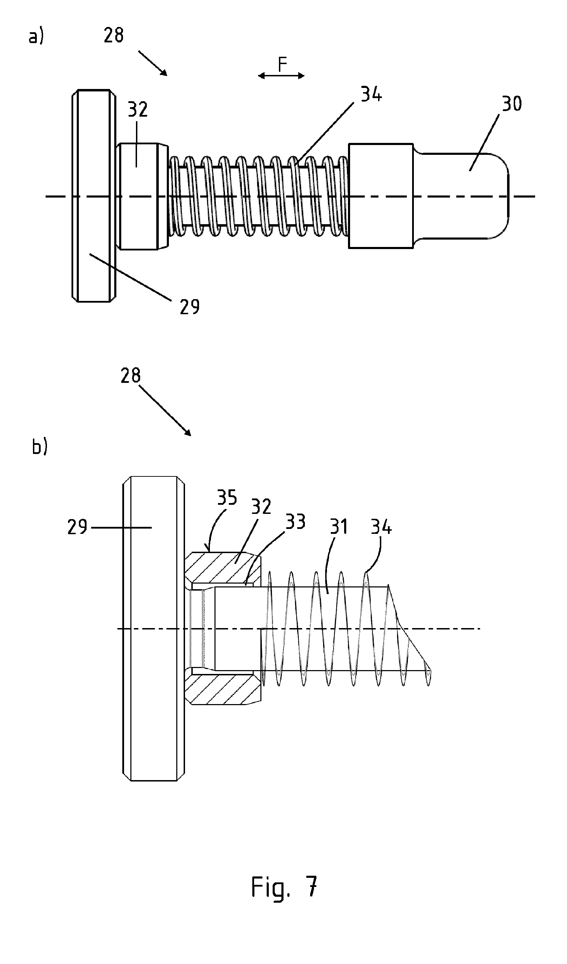

Figur 7a und b zeigen den Sicherungsbolzen 28 in einer Seitenansicht und in einer Querschnittsansicht im Detail. Der Sicherungsbolzen 28 weist einen Griff 29 auf, so dass er von einem anwendenden Monteur mit den Fingern handhabbar ist. Ferner weist der Sicherungsbolzen 28 einen Sicherungsfuß 30 auf, der auf einen Schafft 31 des Sicherungsbolzens 28 aufgepresst ist. Ebenfalls weist der Sicherungsbolzen 28 eine Hülse 32 auf, wobei zwischen der Hülse 32 und dem Schafft 31 ein Spiel 33 ausgebildet ist, so dass der Schafft 31 innerhalb der Bundmutter 32 bewegbar ist.

Zwischen dem Sicherungsfuß 30 und der Bundmutter 32 ist eine Feder 34 angeordnet, die den Bolzen in der in Figur 7a dargestellten Position aufgrund der Federkraft F hält. Hierdurch ragt der Sicherungsfuß 30 nicht näher dargestellt in den jeweiligen Längsschlitz ein.

Zur Montage wird der Sicherungsbolzen 28 mit einer Außenmantelfläche 35 der Hülse 32 in eine nicht näher dargestellte Montageöffnung eingepresst. Nun ist es möglich in Richtung der Federkraft F über den Griff 29 den Sicherungsfuß 30 aus dem Längsschlitz 16 herauszuziehen, das stehende Kettenglied 12 einzuführen bzw. aus dem Längsschlitz herauszunehmen und anschließend durch Loslassen des Griffes 29 den Sicherungsfuß 30 aufgrund der Federkraft wieder in den Bereich des Längsschlitzes einzusetzen.

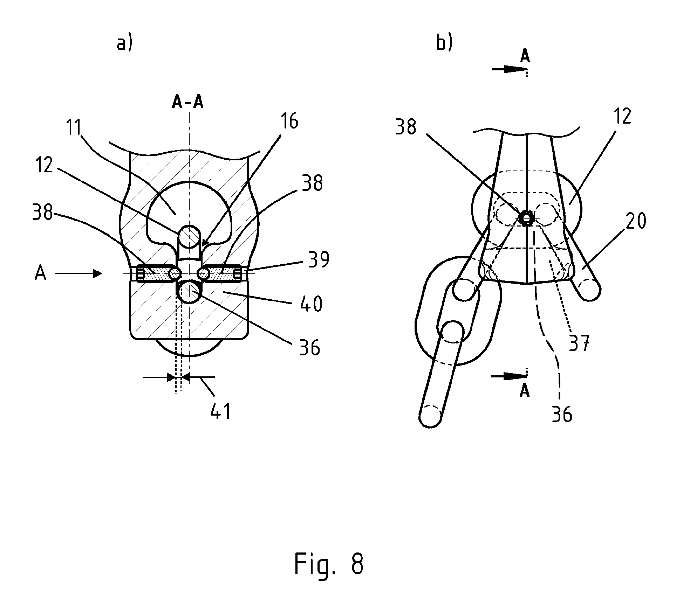

Figur 8a und b zeigen ein erfindungsgemäßes Kettenverkürzungselement 1 mit in einem Längsschlitz 16 eingesetztem stehenden Kettenglied 12. Das stehende Kettenglied 12 ist dabei mit seinem unteren Schenkel 36 auf dem Stütznocken 37 aufliegend, wobei der Schenkel 36 beiderseitig innerhalb des Längsschlitzes 16 formschlüssig von jeweils einem Kugeldruckstift 38 übergriffen wird. Ein jeweiliger Kugeldruckstift 38 ist dabei in einer Bohrung 39 eines Seitenschenkels 40 eingeschraubt, wobei der Kugeldruckstift 38 nach dem Prinzip einer Madenschraube innerhalb der Bohrung 39 in Axialrichtung A relativ verschiebbar ist. Hierdurch ist der Abstand 41, mit dem die Kugel des Kugeldruckstifts 38 in den Längsschlitz 16 eingreift, veränderbar, wodurch die Druckkraft erhöht oder aber verringert werden kann, die benötigt wird, um das stehende Kettenglied 12 entgegen der formschlüssigen Sicherung durch den Kugeldruckstift 38 aus dem Längsschlitz 16 heraus zu bewegen. Das innen liegende Kettenglied 20 ist frei beweglich. Das Sicherungsmittel kann auch derart angeordnet werden, dass ein oberer Schenkel des stehenden Schenkels übergriffen wird, wenn sich das stehende Kettenglied in dem Längsschlitz befindet.

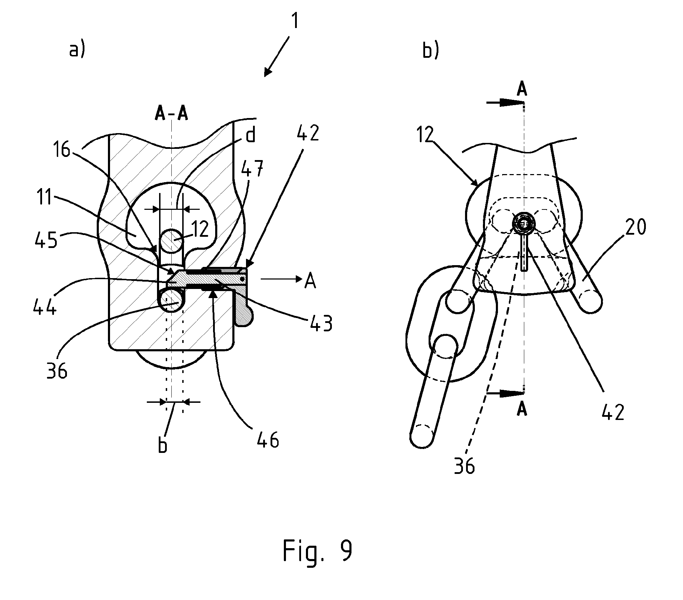

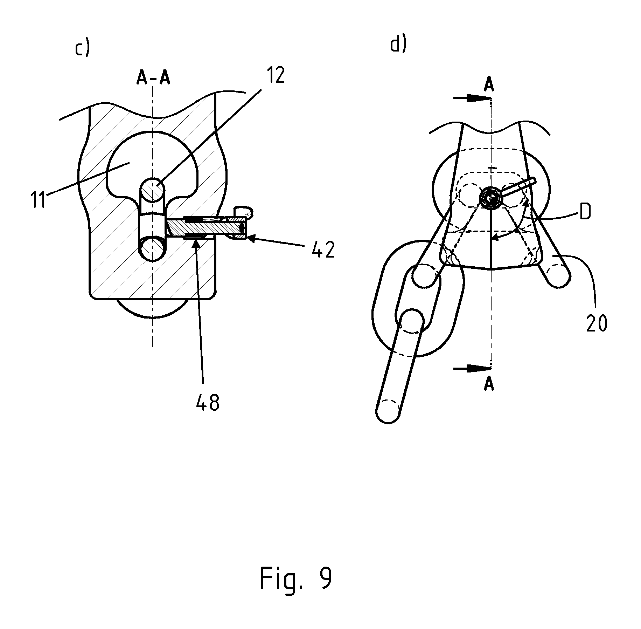

Figur 9a und b zeigen eine Ausführungsvariante des erfindungsgemäßen Kettenverkürzungselements 1 mit einem Sperrhebel 42 in einer Schnittansicht, sowie in einer Seitenansicht in einer Sperrstellung. Figur 9c und d zeigen den Sperrhebel 42 in einer Öffnungsstellung.

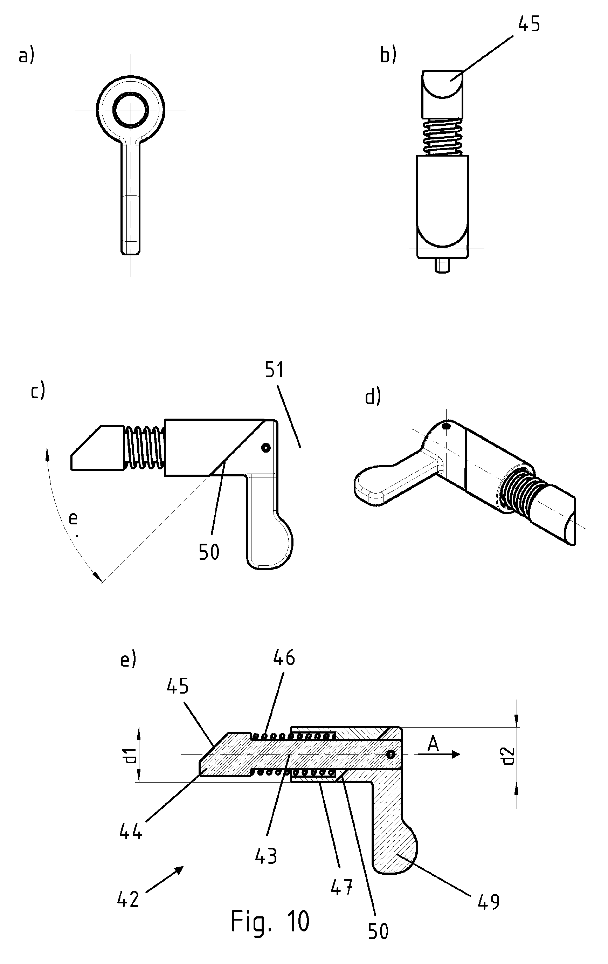

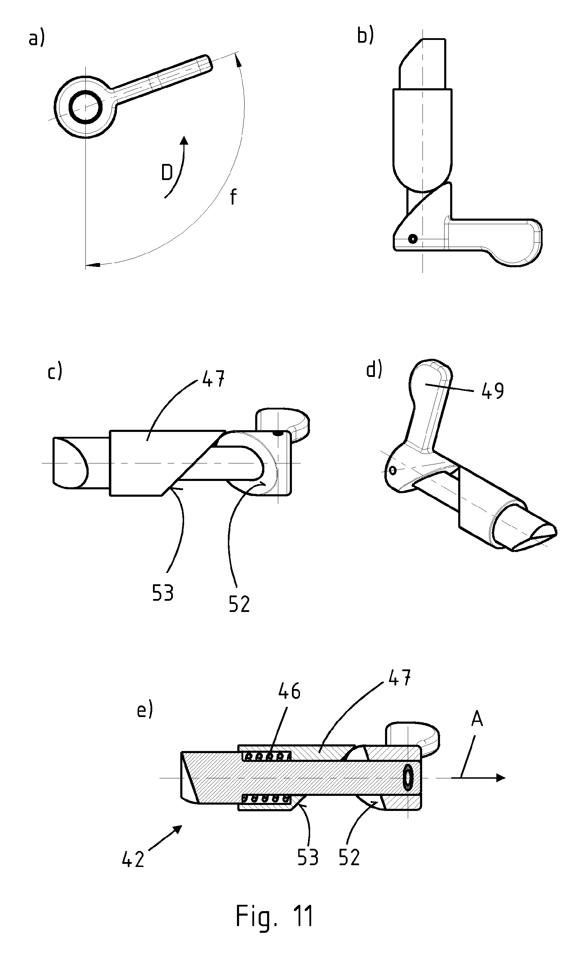

Der Sperrhebel 42 ist näher ebenfalls noch einmal in einer Sperrstellung dargestellt in der Figur 10a bis e und in der Figur 11a bis e hierzu korrespondierend in einer Offenstellung. Der Sperrhebel 42 ist dabei durch einen Sperrstift 43 ausgebildet, wobei am Ende des Sperrstifts 43 ein Sperrfortsatz 44 ausgebildet ist. Der Sperrfortsatz 44 selber weist eine abgeschrägte Fläche 45 auf, so dass der Schenkel 36 des in den Längsschlitz 16 einzuführenden stehenden Kettenglieds 12 bei Passieren der abgeschrägten Fläche 45 den Sperrstift 43 in Axialrichtung A nach außen entgegengesetzt der Federkraft einer Druckfeder 46 drückt. Nach Passieren des Sperrfortsatzes 44 durch den Schenkel 36 fährt der Sperrstift 43 in entgegengesetzter axialer Richtung zurück in die Sperrstellung gemäß Figur 10 bzw. 9a und b. Hierbei greift der Sperrfortsatz 44 in den Längsschlitz 16 mit einem Abstand b ein, wobei der Abstand b zwischen 40 und 70 %, insbesondere zwischen 50 und 65 % des Durchmessers d des Längsschlitzes 16 beträgt.

Ferner ist der Sperrstift 43 in einer Hülse 47 geführt, wobei die Hülse 47 in eine Bohrung 48 gemäß Figur 9a bzw. 9c einführbar ist. Insbesondere wird die Hülse 47 in dieser Bohrung 48 formschlüssig mit einem Presssitz lagefixiert. Hierzu weist die Hülse 47 einen Durchmesser d1 auf, der mit dem Durchmesser der Bohrung 48 einen entsprechend benannten Presssitz ausbildet. An dem Sperrfortsatz 44 gegenüberliegenden Ende des Sperrstifts 43 ist ferner ein Betätigungshebel 49 angeordnet, wobei der Betätigungshebel 49 den Sperrstift 43 zumindest abschnittsweise formschlüssig umgreift. Hierzu weist der Betätigungshebel 49 ebenfalls einen Durchmesser d2 auf, wobei der Durchmesser d2 kleiner ist als der Durchmesser d1 der Hülse 47. Hierdurch kommt es zu keinem Verkanten innerhalb der Bohrung 48 des Betätigungshebels 49, der gemäß Figur 9a in der Geschlossenstellung zumindest teilweise in die Bohrung 48 eingreift.

Die Hülse 47 sowie der Betätigungshebel 49 liegen in einer Kontaktebene 50 formschlüssig in der Sperrstellung aneinander an. Die Kontaktebene 50 ist dabei in einem Winkel e von im Wesentlichen 30 bis 60° und insbesondere 45° zu einer Mittellängsachse 51 des Sperrstifts 43 angeordnet. Durch eine Drehbewegung D verschiebt sich somit die Kontaktfläche 52 des Betätigungshebels 49 relativ zu der Kontaktfläche 53 der Hülse 47, wodurch der Sperrstift 43 in Axialrichtung A aus dem Bereich des Längsschlitzes 16 gemäß Figur 9c herausgezogen wird. Das stehende Kettenglied 12 kann somit ohne Einfluss einer Sicherungseinrichtung aus dem Längsschlitz 16 entnommen werden.

Im Rahmen der Erfindung ist es ferner möglich, die Drehbewegung D auf einen Winkelbereich f derart zu begrenzen, dass ein weiteres Drehen des Betätigungshebels 49 nicht möglich ist. Beispielsweise wird hierzu schematisch angedeutet gemäß Figur 11e die Druckfeder 46 auf Block gefahren, so dass ein weiteres Verschieben des Sperrstifts 43 in Axialrichtung A nicht ermöglicht wird. Sobald der anwendende Monteur den Betätigungshebel 49 loslässt, wird der Sperrstift 43 in Axialrichtung A in den Längsschlitz 16 eingreifend aufgrund der Federkrafteinwirkung zurückgefahren.

### Bezugszeichen:

- 1: - Kettenverkürzungselement
- 2: - erster Kettenstrang
- 3: - zweiter Kettenstrang
- 4: - Ende zu 2
- 5: - Ende zu 3
- 6: - Montagehaken
- 7: - Vertikale
- 8: - Basiskörper
- 9: - Anbindung
- 10: - Öffnung
- 11: - Durchgangsöffnung
- 12: - stehendes Kettenglied
- 13: - unterer Steg zu 12
- 14: - Abstützjoch
- 15: - Abstützfläche zu 14
- 16: - Längsschlitz
- 17: - liegendes äußeres Kettenglied
- 18: - Kettenbett
- 19: - stehendes Kettenglied
- 20: - innen liegendes Kettenglied
- 21: - Innenkettenbett
- 22: - Längenabschnitt
- 23: - Mittelblech
- 24: - Bauteil
- 25: - Fügenaht
- 26: - Teilabschnitt zu 1
- 27: - Verbindungsbolzen
- 28: - Sicherungsbolzen
- 29: - Griff
- 30: - Sicherungsfuß
- 31: - Schafft zu 29
- 32: - Hülse
- 33: - Spiel
- 34: - Feder
- 35: - Außenmantelfläche zu 32
- 36: - unterer Schenkel zu 12
- 37: - Stütznocken
- 38: - Kugeldruckstift
- 39: - Bohrung
- 40: - Seitenschenkel zu 1
- 41: - Abstand
- 42: - Sperrhebel
- 43: - Sperrstift
- 44: - Sperrfortsatz
- 45: - Fläche
- 46: - Druckfeder
- 47: - Hülse
- 48: - Bohrung
- 49: - Betätigungshebel
- 50: - Kontaktebene
- 51: - Mittellängsachse zu 43
- 52: - Kontaktfläche zu 49
- 53: - Kontaktfläche zu 47
- 54: - Ende zu 28

- L2: - Länge zu 2
- L3: - Länge zu 3
- I: - Innenraum
- α: - Winkel
- S: - Schwenkbereich
- β: - Relativschwenkwinkel
- γ: - Absolutschwenkwinkel
- H: - Horizontale
- F: - Federkraft
- A: - 6Axialrichtung
- b: - Abstand
- d: - Durchmesser
- a: - Durchmesser
- d1: - Durchmesser zu 47
- d2: - Durchmesser zu 49
- e: - Winkel
- D: - Drehbewegung
- f: - Winkel

## Patentansprüche

1. Containeraufhängevorrichtung zum Koppeln eines Containers mit einem Absetzarm eines Containertransporters, aufweisend ein Kettenverkürzungselement von dem aus zwei Kettenstränge (2, 3) in einem Winkel (β) zueinander verlaufen, deren Enden (4, 5) mit einer Aufhängung des Containers koppelbar sind und jeweils ein Kettenglied eines Kettenstranges (2, 3) in einer Aufnahme des Kettenverkürzungselementes (1) lagefixierbar ist und das Kettenverkürzungselement (1) einteilig ausgebildet ist, wobei das Kettenverkürzungselement (1) einen Basiskörper (8) aufweist und an einem oberen Ende des Basiskörpers (8) eine Anbindung (9) für den Absetzarm ausgebildet ist und für jeden der beiden Kettenstränge (2, 3) eine Aufnahmebuchse zur lagefixierten Koppelung mit jeweils mindestens einem Kettenglied vorgesehen ist, wobei ein nicht benötigter Längenabschnitt (22) eines jeden Kettengliedes durch eine unterseitige Öffnung (10) des Kettenverkürzungselementes (1) herunterhängt und in einem unteren Bereich einer Durchführöffnung ein vertikal orientierter Längsschlitz (16) zur Aufnahme eines stehenden Kettengliedes (12) ausgebildet ist, **dadurch gekennzeichnet, dass** außenseitig an den Längsschlitz (16) ein Kettenbett (18) angegliedert ist, wobei das Kettenbett (18) in Zugrichtung (Z) des aufzunehmenden Containers das auf das stehende Kettenglied (12) folgende liegende Kettenglied (17) aufnimmt.

2. Containeraufhängevorrichtung nach Anspruch 1 **dadurch gekennzeichnet, dass** das Kettenverkürzungselement (1) als einteiliges Schweissbauteil ausgebildet ist oder dass das Kettenverkürzungselement (1) als einstückiges und werkstoffeinheitliches Gussbauteil ausgebildet ist.

3. Containeraufhängevorrichtung nach Anspruch 1, **dadurch gekennzeichnet, dass** die Kettenstränge (2, 3) in einem Winkelbereich zueinander zwischen 25 und 140 Grad, insbesondere zwischen 30 und 120 Grad verlaufen und/oder dass ein Kettenstrang bei aufgenommenem Container in einem Winkel (γ) zwischen 10 und 70 Grad, insbesondere in einem Winkel (γ) zwischen 15 und 60 Grad zu einer Vertikalen (7) verläuft.

4. Containeraufhängevorrichtung nach einem der Ansprüche 1 bis 3, **dadurch gekennzeichnet, dass** das Kettenverkürzungselement (1) spiegelsymmetrisch um eine Vertikalachse aufgebaut ist, wobei auf jeder Seite ein Kettenaufnahmebereich angeordnet ist und jeder Kettenaufnahmebereich eine Durchführöffnung zur Durchführung eines Kettenstranges (2, 3) aufweist.

5. Containeraufhängevorrichtung nach einem der Ansprüche 1 bis 4, **dadurch gekennzeichnet, dass** das in dem Längsschlitz (16) stehende Kettenglied (12) gegenüber einer Horizontalen in einem Winkel (α) zwischen 2 und 30 Grad, insbesondere zwischen 5 und 20 Grad zu dem Basiskörper (8) hin geneigt ist.

6. Containeraufhängevorrichtung nach einem der Ansprüche 1 bis 5, **dadurch gekennzeichnet, dass** im Bereich des Längsschlitzes (16) ein Sicherungsmittel zur zusätzlichen Lagefixierung des stehenden Kettengliedes (12) angeordnet ist.

7. Containeraufhängevorrichtung nach dem Anspruch 1, **dadurch gekennzeichnet, dass** das auf das außenseitig in dem Kettenbett (18) liegende Kettenglied (17) folgende stehende Kettenglied (19) in einem Schwenkbereich (S) zu dem liegenden Kettenglied (17) schwenkbar zur Aufnahme verschiedener Container ist.

8. Containeraufhängevorrichtung nach einem der Ansprüche 1 bis 7, **dadurch gekennzeichnet, dass** ein Innenraum (1) des Basiskörpers (8) hohl ausgebildet ist, wobei in dem Innenraum (1) auf das jeweils stehende Kettenglied (12) ein liegendes Kettenglied in einem Innenkettenbett (21) gelagert ist, wobei insbesondere über das Innenkettenbett (21) ein Widerlager für die über den Kettenstrang (2, 3) übertragene Zugkraft zum Anheben des Containers gegeben ist.

9. Containeraufhängevorrichtung nach dem Anspruch 8, **dadurch gekennzeichnet, dass** an dem Innenkettenbett (21) in Richtung zu dem stehenden Kettenglied (12) eine Hinterschneidung ausgebildet ist, wobei der Bogen des in dem Innenkettenbett (21) liegenden Kettengliedes (20) durch die Hinterschneidung zumindest abschnittsweise formschlüssig umgriffen ist.

## Claims

1. Container suspension device for coupling a container to a set-down arm of a container transporter, comprising a chain shortening element from which two chain strands (2, 3) extend at an angle (β) relative to each other, the ends (4, 5) of which can be coupled to a suspension of the container and a chain member of each chain strand (2, 3) can be fixed in position in a receiving portion of the chain shortening element (1) and the chain shortening element (1) is formed in one piece, the chain shortening element (1) comprising a base body (8) and on anupper end of the base body (8) an attachment (9) for the set-down arm is formed and for each of the two chain strands (2, 3) a receiving socket is provided for position-fixed coupling to at least one chain member in each case, a redundant length (22) of each chain member hanging down through an opening (10) in the bottom of the chain shortening element (1) and a vertically oriented longitudinal slot (16) for receiving an upright chain member (12) being formed in a lower region of a through-opening, **characterised in that** a chain bed (18) is incorporated on the outside of the longitudinal slot (16), the chain bed (18) receiving the chain member (17) succeeding the upright chain member (12) in the pull direction (Z) of the container to be received.

2. Container suspension device according to claim 1, **characterised in that** the chain shortening element (1) is formed as a component welded in one piece or **in that** the chain shortening element (1) is formed as a component cast in one piece from a single material.

3. Container suspension device according to claim 1, **characterised in that** the chain strands (2, 3) extend at an angle relative to each other in the range between 25 and 140 degrees, in particular between 30 and 120 degrees and/or in that, when the container has been received, a chain strand extends at an angle (γ) between 10 and 70 degrees, in particular at an angle (γ) between 15 and 60 degrees relative to a vertical (7).

4. Container suspension device according to any of claims 1 to 3, **characterised in that** the chain shortening element (1) is constructed so as to have mirror symmetry about a vertical axis, a chain receiving region being arranged on either side and each chain receiving region comprising a through-opening for passage of a chain strand (2, 3).

5. Container suspension device according to any of claims 1 to 4, **characterised in that** the chain member (12) that is upright in the longitudinal slot (16) is inclined relative to a horizontal at an angle (α) between 2 and 30 degrees, in particular between 5 and 20 degrees, towards the base body (8).

6. Container suspension device according to any of claims 1 to 5, **characterised in that** a securing means for additional position-fixing of the upright chain member (12) is arranged in the region of the longitudinal slot (16).

7. Container suspension device according to claim 1, **characterised in that** the upright chain member (19) succeeding the chain member (17) resting externally in the chain bed (18) is pivotable in a pivot region (S) relative to the resting chain member (17) so as to receive a different container.

8. Container suspension device according to any of claims 1 to 7, **characterised in that** an interior (I) of the base body (8) is hollow, in the interior (I) onechain member resting in an interior chain bed (21) being mounted onto each upright chain member (12), in particular the inner chain bed (21) providing an abutment for the tensile force transmitted via the chain strand (2, 3) in order to lift the container.

9. Container suspension device according to claim 8, **characterised in that** an undercut is formed at the inner chain bed (21) in a direction towards the upright chain member (12), the bend in the chain member (20) resting in the inner chain bed (21) being surrounded at least in portions by the undercutin a form-fitting manner.

## Revendications

1. Dispositif de suspension de conteneur servant à coupler un conteneur à un bras de déchargement d'un transporteur de conteneurs, présentant un élément de raccourcissement pour chaîne, à partir duquel s'étendent deux brins de chaîne (2, 3) selon un angle donné (ß) l'un par rapport à l'autre, dont les extrémités (4, 5) peuvent être couplées à une suspension du conteneur, la position d'un maillon de chaîne d'un brin de chaîne (2, 3) pouvant être respectivement fixée dans un logement de l'élément de raccourcissement pour chaîne (1) et l'élément de raccourcissement pour chaîne (1) étant réalisé en une seule partie, où l'élément de raccourcissement pour chaîne (1) présente un corps de base (8) et où une attache (9) pour le bras de déchargement est réalisée au niveau d'une extrémité supérieure du corps de base (8) et un manchon de réception destiné à être couplé de manière fixe en position à respectivement au moins un maillon de chaîne est prévu pour chacun des deux brins de chaîne (2, 3), où un segment en longueur (22) non utile de chaque maillon de chaîne pend en passant par une ouverture (10) côté inférieur de l'élément de raccourcissement pour chaîne (1) et une entaille longitudinale (16) orientée de manière verticale servant à recevoir un maillon de chaîne vertical (12) est réalisée dans une zone inférieure d'une ouverture de passage, **caractérisé en ce qu'**un lit de chaîne (18) est rattaché côté extérieur à l'entaille longitudinale (16), où le lit de chaîne (18) reçoit, dans une direction de traction (Z) du conteneur receveur, le maillon de chaîne horizontal (17) suivant le maillon de chaîne vertical (12).

2. Dispositif de suspension de conteneur selon la revendication 1, **caractérisé en ce que** l'élément de raccourcissement pour chaîne (1) est réalisé sous la forme d'une pièce soudée en une partie, ou **en ce que** l'élément de raccourcissement pour chaîne (1) est réalisé sous la forme d'une pièce coulée d'un seul tenant présentant une unité de matériau.

3. Dispositif de suspension de conteneur selon la revendication 1, **caractérisé en ce que** les brins de chaîne (2, 3) s'étendent les uns par rapport aux autres dans une plage angulaire comprise entre 25 et 140 degrés, en particulier entre 30 et 120 degrés, et/ou **en ce qu'**un brin de chaîne s'étend, lorsque le conteneur est reçu, selon un angle (γ) compris entre 10 et 70 degrés, en particulier selon un angle (γ) compris entre 15 et 60 degrés par rapport à une verticale (7).

4. Dispositif de suspension de conteneur selon l'une quelconque des revendications 1 à 3, **caractérisé en ce que** l'élément de raccourcissement pour chaîne (1) présente une structure à symétrie en miroir autour d'un axe vertical, où une zone de réception de chaîne est disposée sur chaque côté et chaque zone de réception de chaîne présente une ouverture de passage servant à faire passer un brin de chaîne (2, 3).

5. Dispositif de suspension de conteneur selon l'une quelconque des revendications 1 à 4, **caractérisé en ce que** le maillon de chaîne vertical (12) situé dans l'entaille longitudinale (16) est incliné, par rapport à une horizontale, selon un angle (α) compris entre 2 et 30 degrés, en particulier compris entre 5 et 20 degrés par rapport au corps de base (8).

6. Dispositif de suspension de conteneur selon l'une quelconque des revendications 1 à 5, **caractérisé en ce qu'**un moyen de sécurité servant à fixer en complément la position du maillon de chaîne vertical (12) est disposé dans la zone de l'entaille longitudinale (16).

7. Dispositif de suspension de conteneur selon la revendication 1, **caractérisé en ce que** le maillon de chaîne vertical (19) suivant le maillon de chaîne horizontal (17) côté extérieur dans le lit de chaîne (18) peut pivoter dans une plage de pivotement (S) par rapport au maillon de chaîne horizontal (17) en vue de recevoir divers conteneurs.

8. Dispositif de suspension de conteneur selon l'une quelconque des revendications 1 à 7, **caractérisé en ce qu'**un espace intérieur (I) du corps de base (8) est réalisé de manière creuse, où un maillon de chaîne horizontal est logé dans un lit de chaîne intérieur (21) dans l'espace intérieur (I) sur le maillon de chaîne vertical (12) respectif, où un contre-palier est présent pour la force de traction, transmise par l'intermédiaire du brin de chaîne (2, 3) afin de soulever le conteneur, en particulier au-dessus du lit de chaîne intérieur (21).

9. Dispositif de suspension de conteneur selon la revendication 8, **caractérisé en ce qu'**une contre-dépouille est réalisée au niveau du lit de chaîne intérieur (21) en direction du maillon de chaîne vertical (12), où l'arc du maillon de chaîne (20) situé dans le lit de chaîne intérieur (21) est entouré par la contre-dépouille au moins par endroits par complémentarité de forme.
